(19) Europäisches Patentamt
European Patent Office
Office européen des brevets

(11) **EP 1 236 588 B1**

(12) **EUROPÄISCHE PATENTSCHRIFT**

(45) Veröffentlichungstag und Bekanntmachung des Hinweises auf die Patenterteilung:
**20.02.2008   Patentblatt 2008/08**

(51) Int Cl.:
***B60C 23/06*** *(2006.01)*

(21) Anmeldenummer: **01127209.3**

(22) Anmeldetag: **16.11.2001**

(54) **Verfahren und System zur Reifendrucküberwachung für mit Antiblockierschutz-Systemen (ABS-Systemen) ausgerüstete Fahrzeuge**

Method and system for tyre pressure surveillance for vehicles with anti-blocking systems (ABS systems)

Méthode et système pour la surveillance de pression des pneumatiques pour véhicules avec des systèmes anti-blocage (systèmes ABS)

(84) Benannte Vertragsstaaten:
**DE FR GB IT SE**

(30) Priorität: **24.10.2001   DE 10152590**
**28.02.2001   DE 10109725**

(43) Veröffentlichungstag der Anmeldung:
**04.09.2002   Patentblatt 2002/36**

(73) Patentinhaber: **WABCO GmbH**
**30453 Hannover (DE)**

(72) Erfinder:
• **Schmidt, Detlef**
**30989 Gehrden (DE)**
• **Bork, André**
**30455 Hannover (DE)**
• **Dieckmann, Thomas, Dr.**
**30982 Pattensen (DE)**
• **Pape, Klaus**
**30455 Hannover (DE)**
• **Ruhnau, Gerhard**
**31535 Neustadt (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 0 512 745      US-A- 6 092 415**

## Beschreibung

Die Erfindung betrifft ein Verfahren zur Reifendrucküberwachung sowie ein Reifendrucküberwachungssystem.

Sicherheit und Zuverlässigkeit sind zentrale Faktoren in der Automobiltechnik. Dabei spielt der Reifendruck eine wichtige Rolle; es wurde festgestellt, daß Reifendruckverlust ein wesentlicher Faktor bei Unfällen im Straßenverkehr darstellt. 85 % der Reifenpannen sind eine Folge eines schleichenden Druckverlustes. Ein richtig eingestellter Reifendruck gewährleistet im übrigen zu jeder Zeit optimalen Fahrkomfort hinsichtlich Abrollgeräusch, Vertikalstößigkeit und Querfugenempfindlichkeit.

Es ist beispielsweise aus ATZ 102 (200) 11, S. 950 ff. bekannt, den Reifendruck direkt mittels Drucksensoren an zwei- oder dreiachsigen Fahrzeugen zu messen. Die Drucksensoren sind am Reifen angebracht und rotieren mit dem Rad. Die Drucksensoren weisen einen Hochfrequenz-Sender (HF-Sender) auf, welcher die gemessenen Druckwerte an einen Empfänger im Kraftfahrzeug überträgt, der dem Fahrer Druckverluste signalisiert. Dieses Verfahren arbeitet sowohl bei Fahrt als auch bei Stillstand des Fahrzeugs. Da es sich hier um ein rein messendes Verfahren handelt, sind die Kosten relativ hoch, insbesondere wenn sämtliche Räder sensiert werden.

Es ist ferner aus der Zeitschrift ATZ 94 (1992), Seiten 336-340, EP-A- 0 489 562, EP-A-0 489 563 und EP-A-0 607 690 bekannt, den Reifendruck indirekt mit Hilfe der Radsensoren von Antiblockierschutzsystemen (ABS-Systemen) zu überwachen. Der Reifendruck wirkt sich auf den Abrollumfang des Rades aus. Die mit Hilfe der Radsensoren des ABS-Systems ermittelte Radrotationsgeschwindigkeit ist abhängig vom Abrollumfang des Rades. Ändert sich die Radrotationsgeschwindigkeit eines Rades bei Geradeausfahrt und ungebremst relativ zu der Referenzgeschwindigkeit der anderen Räder oder eines anderen Rades, so stellt dies ein Indiz für eine Änderung des Abrollumfanges des betreffenden Rades infolge eines Druckverlustes des Reifens oder für eine Ablösung von Reifenteilen am Reifenumfang oder für eine Beladungsänderung dar, wobei jede Änderung des Abrollumfanges als Druckänderung interpretiert wird. Diese bekannten Verfahren sind relativ unpräzise und können nur relativ große und plötzlich auftretende Druckänderungen feststellen.

Durch die DE-A-198 07 880 ist ein Verfahren zur Überwachung des Reifenluftdrucks von Rädern eines Kraftfahrzeuges bekannt, bei dem im laufenden Fahrbetrieb für wenigstens ein angetriebenes Rad der Schlupf sowie die zugehörige Reifenumfangskraft in Form jeweiliger Reifenumfangskraft-Schlupf-Messwertpaare erfasst werden. Zu diesen erfassten Messwertpaaren ermittelt ein Auswerterechner eine Ausgleichskurve und zwar in Form einer linearen Regressionsgraden, da der funktionale Zusammenhang von Reifenumfangskraft und Schlupf im beim bekannten Verfahren betrachteten Mikroschlupfbereich, in dem Schlupfwerte kleiner als etwa 2% herangezogen werden, linear angenommen wird. Es wird dann der Offsetwert der ermittelten Ausgleichskurve bezüglich des Nullpunktes im Reifenumfangskraft-Schlupf-Kennfeld ermittelt und aus diesem Offsetwert wird das zugehörige Radradienverhältnis zwischen wenigsten einem nicht angetriebenen und einem angetriebenen Rad geschlossen und daraus der relative Reifenluftdruck der Räder bestimmt. Der relative Reifenluftdruck wird dabei bei einem Kraftfahrzeug mit einer auf ersten Achse angetriebenen Rädern und auf einer zweiten Achse nicht angetriebenen Rädern sowohl für die jeweils seitengleichen als auch für die diagonal gegenüberliegenden Radpaare bestimmt. Es ist ferner noch vorgesehen den absoluten Reifenluftdruck an wenigstens einem Rad direkt zu messen und als Referenzdruckwert für den für wenigstens ein anderes Rad ermittelten relativen Reifenluftdruckwert benutzt wird.

Der Erfindung liegt daher die Aufgabe zugrunde, ein Verfahren und System zur Reifendrucküberwachung anzugeben, das kostengünstig ist und empfindlicher auf geringfügige und schleichende Druckverluste reagiert.

Diese Aufgabe wird durch die in den Patentansprüchen 1 und 7 angegebenen Ausgestaltungen der Erfindung gelöst. Vorteilhafte Weiterbildungen der Erfindung sind in den Unteransprüchen angegeben.

Das Verfahren zur Reifendrucküberwachung hat den Vorteil, daß infolge der Zählung der jeweils zurückgelegten Wegstrecke bei Verwendung üblicher Radsensoren von ABS-Systemen nur wenige Umrechnungsschritte erforderlich sind, insbesondere weniger Umrechnungsschritte als bei den bekannten Verfahren, und hierdurch eine größere Rechengenauigkeit erreicht werden kann, insbesondere bei Verwendung von Digitalrechnern. Eine geringere Anzahl von Umrechnungsschritten hat den Vorteil, daß im Laufe der Berechnung weniger oft gerundet wird bzw. weniger oft Nachkommastellen bei der Berechnung vernachlässigt werden. Unter Anwendung der Erfindung kann dies vorteilhafterweise durch einfaches Zählen der von den Radsensoren abgegebenen Wegimpulse erzielt werden, welche proportional zur zurückgelegten Wegstrecke erzeugt werden.

Gemäß vorteilhafter Weiterbildungen der Erfindung werden die gezählten Wegstrecken der einzelnen Räder jeweils diagonal bezüglich der Radanordnung an dem Fahrzeug miteinander addiert, und eine Erkennung auf einen unerwünschten Reifendruck-Zustand erfolgt, wenn die diagonalen Summen um mehr als einen vorgegebenen Grenzwert voneinander abweichen. Zudem erfolgt die Überwachung der gezählten Wegstrecken in mehreren Überwachungszyklen, wobei die Erkennung auf einen unerwünschten Reifendruck-Zustand erfolgt, wenn die Abweichungen der diagonalen Summen einen für alle Überwachungszyklen festgelegten Summengrenzwert überschreitet. Hierdurch kann eine weitere Verbesserung der Genauigkeit und Sensibilität bei der Erkennung unerwünschter Reifendruck-Zustände erzielt werden.

Die Erfindung schlägt in der Ausgestaltung des Anspruchs 7 eine Kombination von direkter Reifendruckmessung mit Hilfe von Drucksensoren eines Reifendruckmeßsystems und von indirekter Reifendruckermittlung durch Messung der vom Abrollumfang abhängigen Größen, wie Radrotationsgeschwindigkeit und zurückgelegte Wegstrecke, mittels Radsensoren eines vorhandenen ABS-Systems vor. Hierdurch ist es möglich, Drucksensoren des Reifendruckmeßsystems durch ABS-Radsensoren zu ersetzen und/oder die ABS-Steuereinrichtung auch zur Auswertung der Meßsignale des Reifendruckmeßsystems zu verwenden, wodurch Bauelemente und Kosten eingespart werden können, ohne die Zuverlässigkeit und Sicherheit der Reifendrucküberwachung zu beeinträchtigen. Die mit Hilfe der Drucksensoren ermittelten tatsächlichen Reifendrücke stützen die mit Hilfe des ABS-Systems indirekt ermittelten Werte.

Die Erfindung soll nachfolgend anhand der beigefügten Zeichnung, in der mehrere Ausführungsbeispiele der Erfindung dargestellt sind, näher erläutert werden.

Es zeigen

Fig. 1-9  verschiedene Ausführungsbeispiele der erfindungsgemäßen Reifendrucküberwachungseinrichtung bei Dreiachsfahrzeugen,

Fig. 10  ein Blockschaltbild einer ABS-Steuereinrichtung mit integrierter Steuereinheit eines Reifendruckmeßsystems,

Fig. 11  ein Blockschaltbild einer Einrichtung zur Wegstreckenermittlung und

Fig. 12  ein Diagramm, in dem die durch ein Zählregister der Einrichtung nach Fig. 11 gezählten Periodenzahl in Abhängigkeit von der Wegstrecke dargestellt ist.

Gleiche Bauteile in den Figuren der Zeichnung sind mit den gleichen Bezugszeichen versehen.

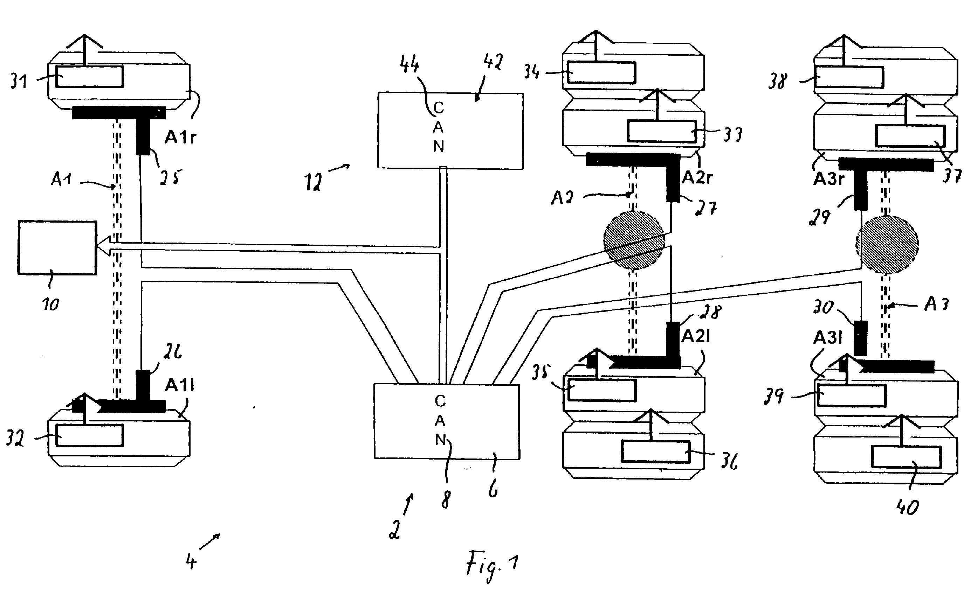

Die Zeichnung zeigt schematisch in den Fig. 1-9 mit Antiblockierschutz-Systemen (ABS-Systemen) 2 und Reifendruckmeßsystemen 12 ausgestattete Dreiachsfahrzeuge 4. Die nachfolgenden Ausführungen gelten entsprechend auch für Fahrzeuge mit (2 + n) -Achsen mit n ≥ 0, d. h. auch für Zweiachs-Fahrzeuge. Die ABS-Systeme und Reifendruckmeßsysteme sind zu einem Reifendrucküberwachungssystem kombiniert.

Die Dreiachsfahrzeuge 4 weisen jeweils eine erste Achse A1, die hier die Vorderachse ist und ein rechtes Vorderrad A1r und ein linkes Vorderrad A1l aufweist, eine zweite Achse A2, die hier die Antriebsachse ist und rechte Zwillingsräder A2r und linke Zwillingsräder A2l aufweist, und eine dritte Achse A3 auf, die rechte Zwillingsräder A3r und linke Zwillingsräder A3l aufweist.

Statt der Zwillingsbereifung kann natürlich auch eine Einfachbereifung vorliegen.

Die ABS-Systeme 2 umfassen eine ABS-Steuereinheit 6 und eine CAN-Schnittstelle 8. Den Rädern wenigstens einer der drei Achsen A1, A2, A3 sind schematisch durch einen gemeinsamen Block dargestellte Radsensoren und Bremsdruckmodulatoren 25, 26, 27, 28, 29, 30 zugeordnet. Die ABS-Steuerein-heit 6 ermittelt aus den Signalen der Radsensoren die Radrotationsgeschwindigkeit oder die zurückgelegte Wegstrecke. Eine Rollradiusänderung durch Reifendruckverlust wird durch eine sich erhöhende Radrotationsgeschwindigkeit oder sich verringernde Wegstrecke erkannt und dem Fahrer auf einem Display 10 angezeigt. Einflüsse durch besondere Situationen, wie Kurvenfahrt, Beschleunigung, Verzögerung, hohe Geschwindigkeit, Radlast (Beladung) und Abrieb, auf den Rollradius und damit auf die Radrotationsgeschwindigkeit oder auf die zurückgelegte Wegstrecke werden durch geeignete achsweise, seitenweise und/oder diagonale Vergleiche der Radrotationsgeschwindigkeit oder Wegstrecke und/oder Vergleiche mit Schwellwerten kompensiert.

Das Reifendruckmeßsystem 12 weist für jedes Rad wenigstens einer der drei Achsen eine Radelektronik 31, 32, 33, 34, 35, 36, 37, 38, 39, 40 auf, die im oder am Reifen angeordnet ist und als wesentliche Bauteile einen Sensor, eine Signalverarbeitungsstufe, eine HF-Senderstufe und eine Batterie als Energiequelle umfaßt. Anstelle der Energiezufuhr über eine Batterie ist auch eine externe Energiezufuhr mit Hilfe der Transpondertechnik möglich. Die Radelektronik bildet mit dem jeweiligen Reifenfüllventil eine Einheit, die auf der Felge montiert ist. Der Sensor weist einen den Druck im Reifen messenden Drucksensor und eine Einrichtung zur Meßwerterfassung und Signalaufbereitung auf. Der Sensor steuert einen Digitalbaustein, in den die HF-Sendestufe integriert ist, welche die gemessenen Daten an eine Empfänger/ Auswerteeinheit 42, ggf. mit CAN-Schnittstelle 44, sendet, beispielsweise im 433-MHz-Bereich. Jede Radelektronik besitzt eine eigene Kennung, die beim Senden mit übertragen wird. Der jeweils eingestellte Reifendruck wird vom Fahrer initialisiert oder das System greift auf Solldrücke zurück, die für den betreffenden Fahrzeugtypen hinterlegt sind, wobei das System die eingestellten Drücke auf Plausibilität überprüft. Ein Rädertausch oder -wechsel wird vom System hinsichtlich Position am Fahrzeug erkannt. Eine Reifendruckabnahme - sowohl bei Stillstand als auch bei Fahrt - wird dem Fahrer durch die Empfänger/Auswerteeinheit 42 auf dem Display 10 angezeigt.

Die Fig. 1 zeigt schematisch ein Reifendrucküberwachungssystem, das ein 6-Kanal-ABS-System 2 nutzt, das Radsensoren und Bremsdruckmodulatoren (dargestellt als gemeinsame Blöcke 25, 26, 27, 28, 29, 30) an allen drei Achsen aufweist, und ein Reifendruckmeßsystem 12 mit zehn Radelektroniken 31, 32, 33, 34, 35, 36, 37, 38, 39, 40 aufweist, wobei jedes Rad jeder Achse eine Radelektronik aufweist. Das ABS-System zur indirekten Ermittlung der Reifendrücke und das Reifendruckmeßsystem arbeiten parallel und unabhängig.

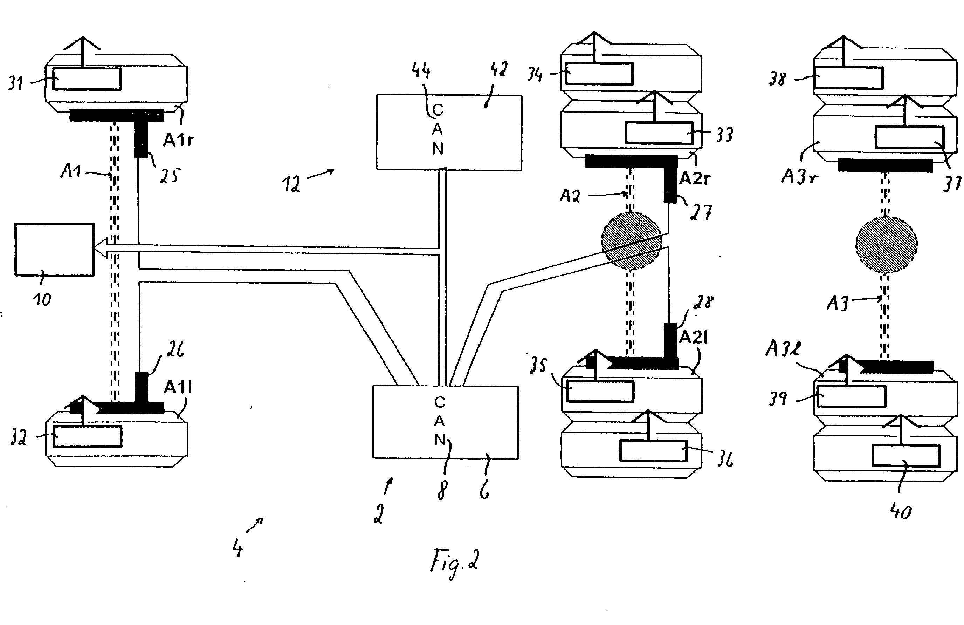

Die Fig. 2 zeigt ein Reifendrucküberwachungssystem, das ein 4-Kanal-ABS-System nutzt und sich von dem System nach Fig. 1 dadurch unterscheidet, daß nur vier Sensoren und vier Bremsdruckmodulatoren 25, 26, 27, 28 für die erste und zweite Achse A1 und A2 vorgesehen sind und daß die dritte Achse für die ABS-Regelung nicht sensiert wird, sondern indirekt geregelt wird. Die direkte Druckmessung durch das Reifendruckmeßsystem 12 erfolgt wie bei dem System nach Fig. 1 an allen Rädern sämtlicher Achsen. Bei der Ausführung nach Fig. 2 werden zwei ABS-Radsensoren und zwei ABS-Polräder eingespart.

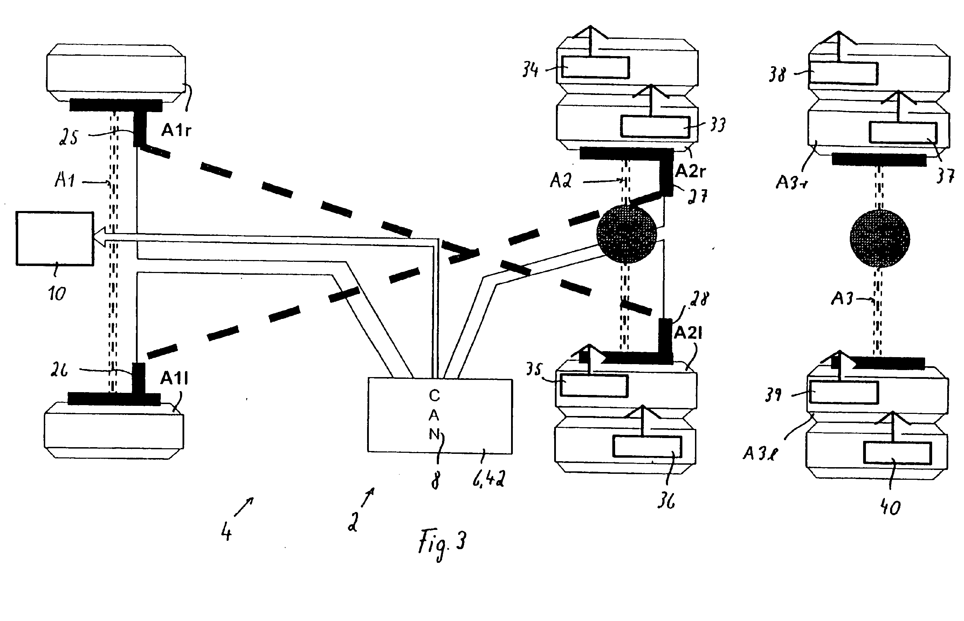

Die Fig. 3 zeigt schematisch ein Reifendrucküberwachungssystem, bei dem das für die Reifendrucküberwachung genutzte ABS-System wie bei Fig. 2 vier Sensoren und vier Brems-druckmodulatoren 25, 26, 27, 28 aufweist, und zwar an der ersten und zweiten Achse A1 und A2. Anders als bei den Ausführungsformen nach den Fig. 1 und 2 sind Radelektroniken 33, 34, 35, 36, 37, 38, 39, 40 des Reifendruckmeßsystems 12 nur für die Zwillingsräder der zweiten und dritten Achse A2 und A3 vorgesehen. An den Rädern der Vorderachse A1 sind keine Radelektroniken vorgesehen. Ferner ist anders als bei den Fig. 1 und 2 die Empfänger/Auswerteeinheit 42 des Reifendruckmeßsystems 12 im Gehäuse der ABS-Steuerein-heit integriert, wobei der ABS-Rechner die Auswertung der Meßsignale der Radelektroniken mit übernimmt. Eingespart werden somit an der dritten Achse die Radsensoren und Radpolräder und an der ersten Achse Radelektroniken sowie die bei den Ausführungsformen nach den Fig. 1 und 2 separate Auswerteeinrichtung und CAN-Schnittstelle sowie das separate Gehäuse des Reifendruckmeßsystems. Es erfolgt bei dieser Ausführungsform ein Diagonalvergleich der Summe der Radrotationsgeschwindigkeiten oder Wegstrecken des rechten Vorderrades A1r und des linken Rades der zweiten Achse A2l mit der Summe der Radrotationsgeschwindigkeiten oder Wegstrecken des linken Vorderrades A1l und des rechten Rades der zweiten Achse A2r. Bei Reifendruckabfall wird sich die Geschwindigkeit des betreffenden Rades gegenüber den anderen Rädern erhöhen oder wird sich die zurückgelegte Wegstrecke entsprechend verringern. Positive Werte bedeuten dann beispielsweise beim Geschwindigkeitsvergleich Minderdruck am rechten Vorderrad A1r oder linkem Rad A2l der zweiten Achse; negative Werte bedeuten Minderdruck am linken Vorderrad A1l oder am rechten Rad A2r der zweiten Achse.

Der Diagonalvergleich über die Radrotationsgeschwindigkeit oder Wegstrecke der Räder der ersten und zweiten Achse ersetzt die Drucksensoren an der ersten Achse.

Durch den Diagonalvergleich werden Kurveneinflüsse weitestgehend kompensiert. Die über die Raddrucksensoren ermittelten absoluten Reifendrücke stützen die Ergebnisse aus dem Diagonalvergleich.

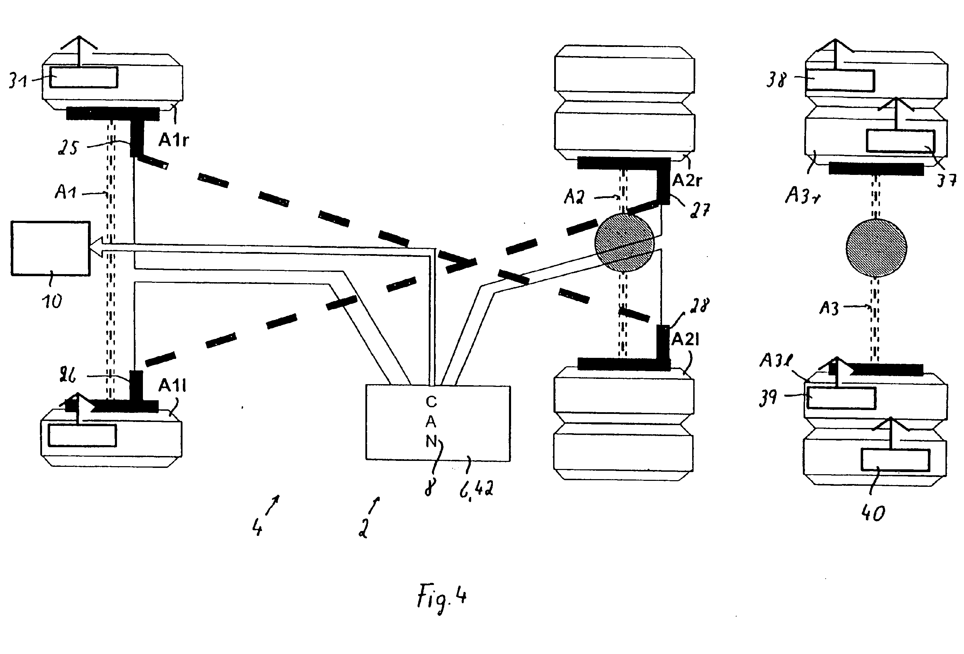

Die Fig. 4 zeigt eine Ausführungsform des erfindungsgemäßen Reifendrucküberwachungssystems, die sich von dem entsprechenden System nach Fig. 3 dadurch unterscheidet, daß Radelektroniken 31, 32 an den Rädern A1r und A1l der ersten Achse vorgesehen sind statt an den Rädern der zweiten Achse A2. Der Vorteil gegenüber der Ausführungsform nach Fig. 3 ist darin zu sehen, daß das Last/Leerverhältnis an der ersten Achse, der Vorderachse, geringer ist als an der zweiten Achse, so daß sich an der ersten Achse Rollradiusänderungen aufgrund von Beladungsänderungen nicht so stark bemerkbar machen wie an der zweiten Achse oder auch an der dritten Achse.

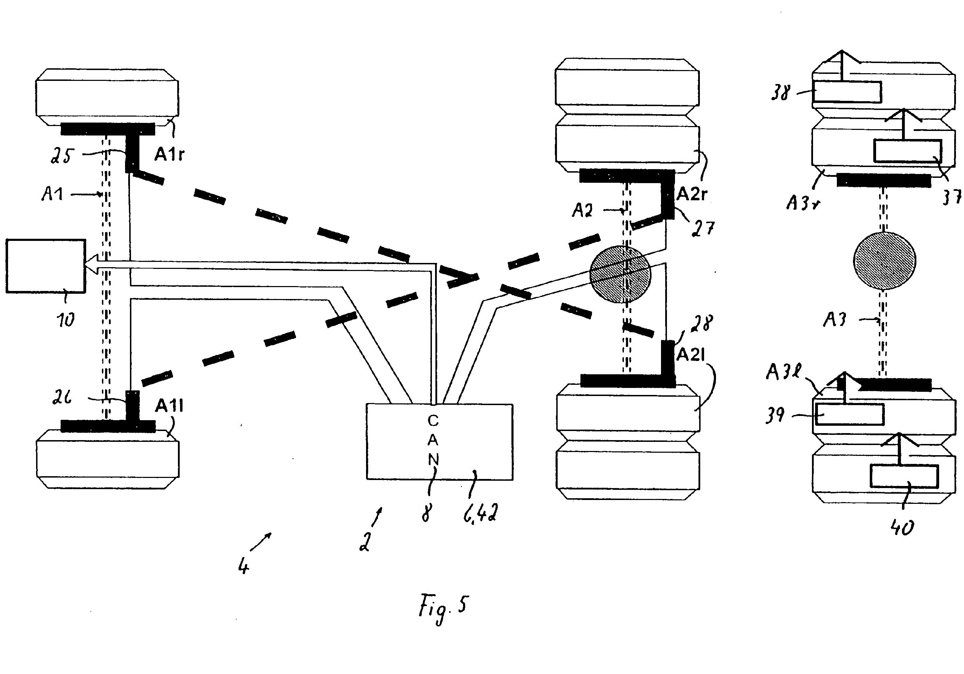

Die Fig. 5 zeigt eine Ausführungsform, die sich von den Ausführungsformen nach den Fig. 3 und 4 dadurch unterscheidet, daß die direkte Druckmessung nur noch an den Zwillingsreifen der dritten Achse A3 vorgenommen wird. Eine Stützung der indirekten Druckermittlung über den Diagonalvergleich der Räder der ersten und der zweiten Achse durch die direkte Druckmessung an der dritten Achse kann hier infolge der räumlichen Nähe der zweiten und der dritten Achse zueinander durchgeführt werden. Infolge der räumlichen Nähe ist im fehlerfreien Fall davon auszugehen, daß die Raddrehzahlen bzw. Raddrehgeschwindigkeiten der Räder an der zweiten und der dritten Achse im wesentlichen identisch sind und somit die Geschwindigkeitswerte der zweiten Achse auf die dritte Achse übertragen werden können.

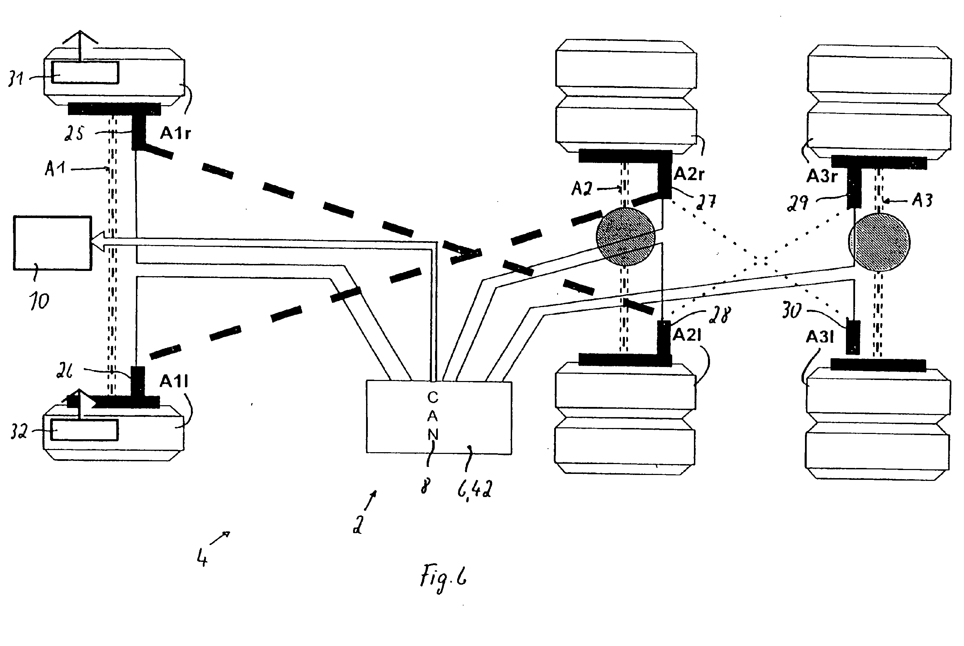

Die Fig. 6 zeigt eine Ausführungsform des Reifendrucküberwachungssystems, bei der Radsensoren 25, 26, 27, 28, 29, 30 des ABS-Systems 2 an den Rädern sämtlicher drei Achsen A1, A2, A3 vorgesehen sind. Eine direkte Reifendruckmessung über Radelektroniken 31, 32 ist kostensparend nur an der ersten Achse A1, der Vorderachse bzw. Lenkachse, vorgesehen. Anders als bei den Ausführungsformen nach den Fig. 1 und 2 werden bei dieser Ausführungsform nicht einzelne Räder sondern diagonale Summen der Radgeschwindigkeitssignale oder der Wegstrecken aller sensierten Achsen miteinander verglichen. Kurveneinflüsse werden hierdurch weitestgehend kompensiert.

Es werden folgende Diagonalendifferenzen beim Geschwindigkeitsvergleich gebildet, wobei v die Geschwindigkeit bedeutet:

$$\text{Diagonalendifferenz } 1 : (v_{A1r} + v_{A2l}) - (v_{A1l} + v_{A2r})$$

$$\text{Diagonalendifferenz } 2 : (v_{A2r} + v_{A3l}) - (v_{A2l} + v_{A3r})$$

$$\text{Diagonalendifferenz } 3: (v_{A1r} + v_{A3l}) - (v_{A1l} + v_{A3r})$$

Die Auswertung der Diagonalendifferenzbildung ergibt folgendes:

| Diagonaldifferenz 1 | Diagonaldifferenz 2 | Diagonaldifferenz 3 | Minderdruck |
|---|---|---|---|
| positiv | 0 | positiv | A1r |
| negativ | 0 | negativ | A1l |
| negativ | positiv | 0 | A2r |
| positiv | negativ | 0 | A2l |
| 0 | negativ | negativ | A3r |
| 0 | positiv | positiv | A3l |

Durch diese Diagonalsummenvergleiche ergibt sich somit die Möglichkeit, eine radzugeordnete Minderdruckanzeige zu realisieren.

Beispielhaft sei die zuvor erwähnte Bildung von Diagonalendifferenzen auch für ein Vierachsfahrzeug nachfolgend dargestellt, wobei auch bei einem Vierachsfahrzeug lediglich drei diagonale Differenzen zu bilden sind:

$$\text{Diagonalendifferenz } 1: (v_{A1r} + v_{A2l}) - (v_{A1l} + v_{A2r})$$

$$\text{Diagonalendifferenz } 2: (v_{A3r} + v_{A4l}) - (v_{A3l} + v_{A4r})$$

$$\text{Diagonalendifferenz } 3: (v_{A1r} + v_{A4l}) - (v_{A1l} + v_{A4r})$$

| Diagonaldifferenz 1 | Diagonaldifferenz 2 | Diagonaldifferenz 3 | Minderdruck |
|---|---|---|---|
| positiv | 0 | positiv | A1r |
| negativ | 0 | negativ | A1l |
| negativ | 0 | 0 | A2r |
| positiv | 0 | 0 | A2l |
| 0 | negativ | 0 | A3r |
| 0 | positiv | 0 | A3l |
| 0 | negativ | negativ | A4r |
| 0 | positiv | positiv | A4l |

Grundsätzlich führt jede Differenzenbildung, bei der mindestens eine Achse einer Diagonalendifferenz noch in eine andere Diagonalendifferenz eingerechnet wird, zu einer eindeutigen Radzuordnung. Ab einem Fünfachser ist damit eine vierte Diagonalendifferenz notwendig.

Die mit Hilfe der Radelektronik 31 und 32 an der ersten Achse gemessenen absoluten Reifendrücke stützen den Diagonalsummenvergleich.

Die Ausführungsform nach Fig. 6 hat besondere Vorteile bei der Verwendung von externen Reifendruck-Sensoren, die nämlich beim Wechsel kompletter Räder am Fahrzeug verbleiben können. Es braucht dann nicht jedesmal beim Radwechsel die Radkennung des Drucksensors in die Elektronik über ein geeignetes Diagnosegerät eingegeben zu werden. Die Verwendung von Radelektroniken zur Messung der Absolutreifendrücke nur an der ersten Achse (Vorderachse bzw. Lenkachse) hat überdies den großen Vorteil, daß die kostenintensiven Reifendrucksensoren an der zweiten und dritten Achse entfallen können. Ansonsten müßte man an den Zwillingsreifen doppelte Reifendrucksensoren bauen oder man müßte zwei Reifenfüllanschlüsse über Schläuche, Verschraubungen und T-Stücke aufwendig miteinander verbinden.

Durch die Absolutdruckmessung an den Rädern der ersten Achse können die beiden anderen Achsen sicherer miteinander verglichen werden. Bei den Diagonalsummenvergleichen kann durch die Druckmessung an der ersten Achse davon ausgegangen werden, daß wenigstens zwei Werte einen Bezug zum absoluten Druckniveau haben, was bei der Verwendung nur von ABS-Radsensoren nicht der Fall wäre, so daß eine kostengünstige, zuverlässige und sichere Reifendrucküberwachung realisierbar ist.

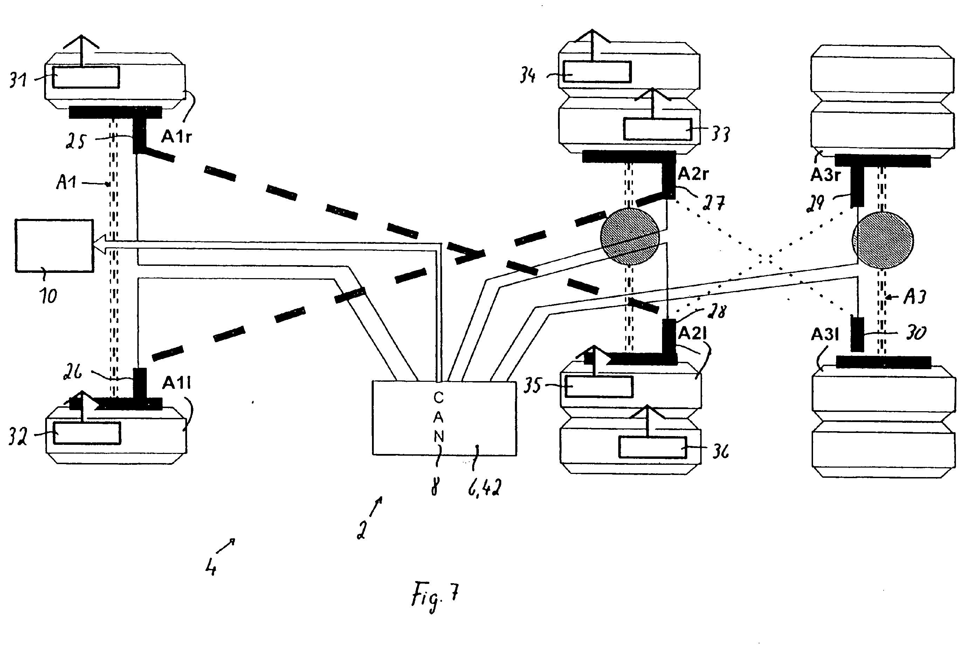

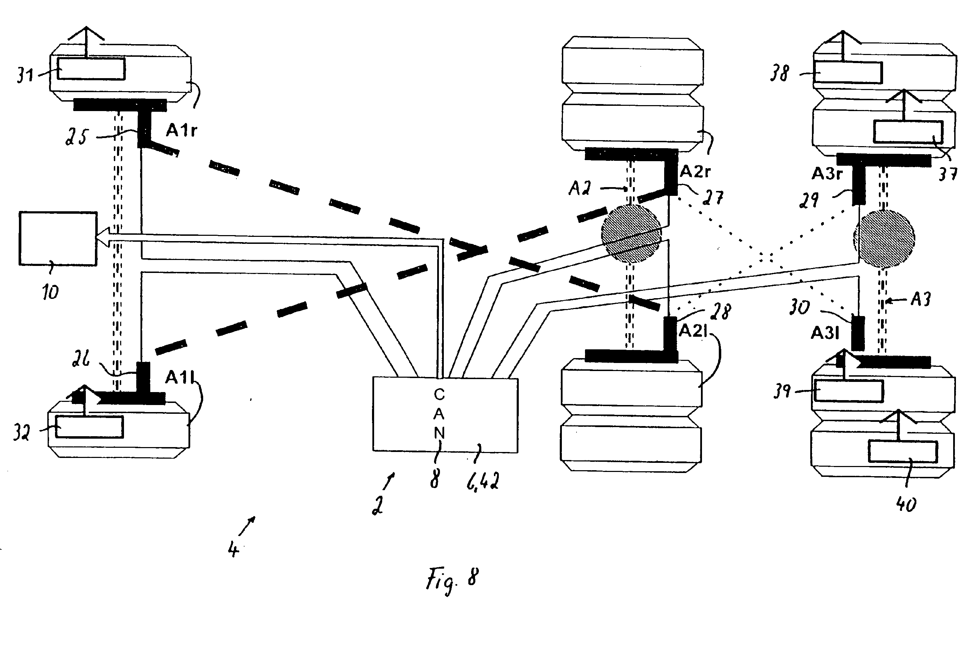

Die Fig. 7 und 8 zeigen Ausführungsformen der Erfindung, die sich von der Ausführungsform nach Fig. 6 dadurch unterscheiden, daß der absolute Reifendruck an zwei Achsen gemessen wird, und zwar an den Rädern der ersten Achse A1 und an den Rädern der zweiten Achse A2 (Fig. 7) sowie an den Rädern der ersten Achse A1 und an den Rädern der dritten Achse A3 (Fig. 8). Dies bedeutet zwar einen größeren baulichen Aufwand gegenüber der Ausführungsform nach Fig. 6; es wird jedoch eine größere Stützung der Ergebnisse aus den Diagonalvergleichen erzielt.

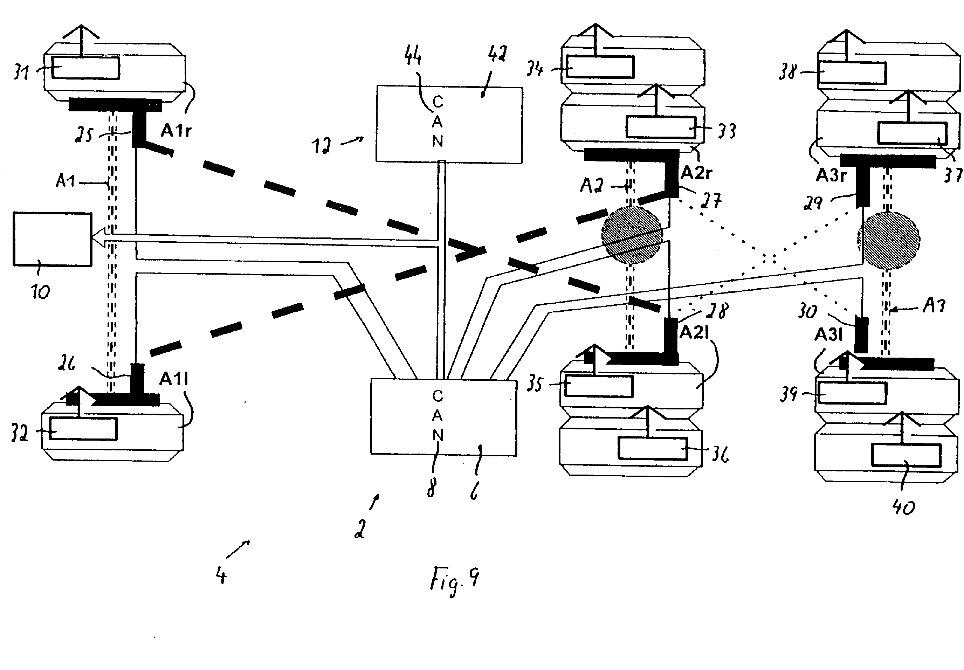

Die Fig. 9 zeigt eine Ausführungsform der Erfindung, die vollständig der Ausführungsform nach Fig. 1 entspricht mit der Ausnahme, daß ein Diagonalsummenvergleich nach den Ausführungsformen gemäß Fig. 6-8 durchgeführt wird.

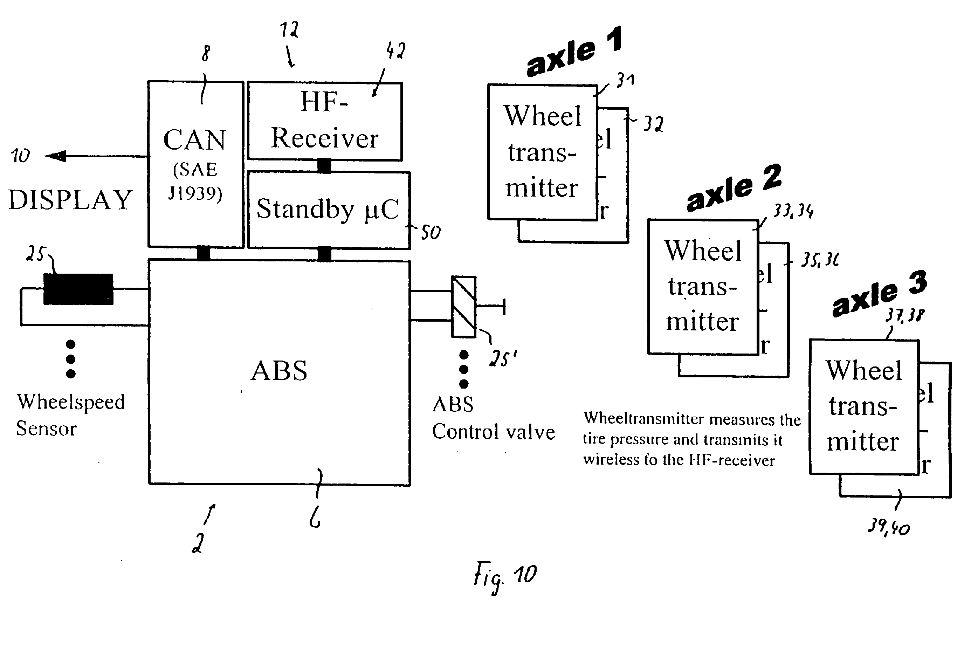

Die Fig. 10 zeigt schematisch die Integration der Empfänger/Auswerteeinrichtung 42 des Reifendruckmeßsystems 12 in die ABS-Steuereinheit 6 des ABS-Systems 2. In einem gemeinsamen Gehäuse sind die ABS-Steuereinheit 6, der HF-Empfänger 42 des Reifendruckmeßsystems 12, ein Stand-by-Micro-Controller 50 sowie eine für beide Systeme gemeinsam verwendete CAN-Schnittstelle 8 angeordnet. Der Standby-Controller ist ständig empfangsbereit für die Signale der Radelektroniken, auch bei abgestelltem Fahrzeug, da die Radelektroniken ständig gemessene Druckwerte senden. Diese Ausbildung ist bei den Ausführungsformen der erfindungsgemäßen Reifendrucküberwachungseinrichtung nach den Fig. 3-8 vorgesehen. Bezugszeichen 25, 25' und 10 sowie 31-40 bezeichnen schematisch einen ABS-Radsensor, ein ABS-Regelventil, ein Display sowie Radelektroniken des Reifendruckmeßsystems.

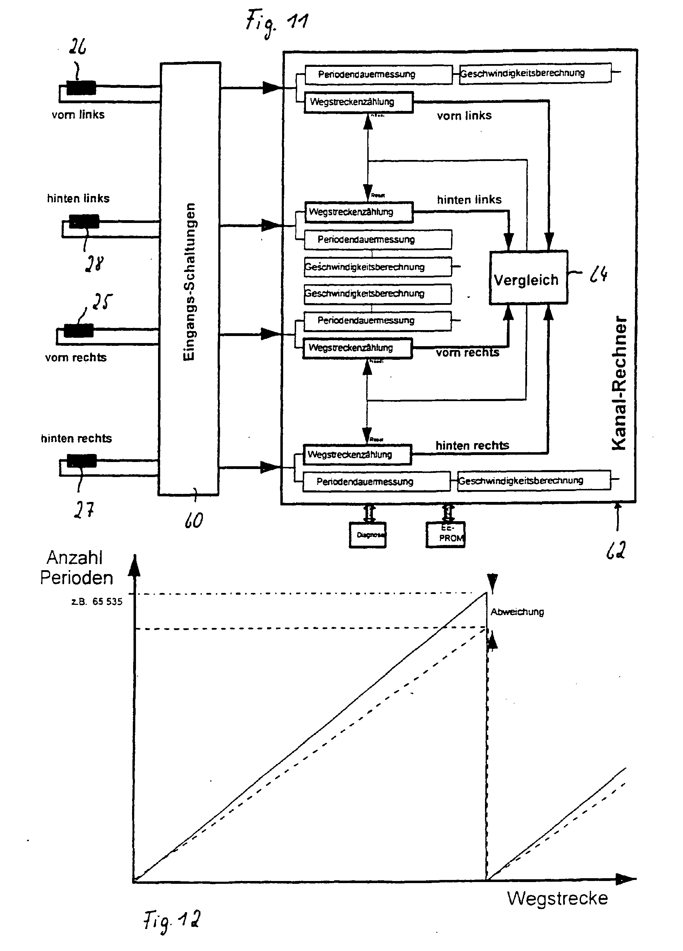

Anhand der Fig. 11 und 12 soll eine Einrichtung zur Wegstreckenermittlung näher erläutert werden. Von Radsensoren 25, 26, 27, 28 abgegebene Spannungen werden von Eingangsschaltkreisen 60 gefiltert und in Rechtecksignale umgewandelt, deren Halb- oder Ganz-Periodendauern von mindestens einem Micro-Controller 62 ausgewertet werden. Es können mehrere Micro-Controller verwendet werden. In der Zeichnung ist zum besseren Verständnis nur ein Micro-Controller gezeichnet. Die für Antiblockierschutz/Antriebsschlupfregelung (ABS/ASR) benötigten Funktionen sind mit Periodendauermessung und Geschwindigkeitsberechnung bezeichnet.

Erfindungsgemäß ist eine parallel angeordnete Wegstreckenermittlung vorgesehen, die ein Zählregister darstellt, dessen Wert bei jedem Nulldurchgang der Sensorspannung erhöht wird. Die Wegstrecke kann somit in einfacher Weise durch Zählen der Perioden der Sensorsignale ermittelt werden.

Wenn der Micro-Controller 62 nur Ganz-Perioden oder Vielfache davon auswertet, so wird der Wegstreckenzähler (Zählregister) nur bei jedem entsprechenden Nulldurchgang erhöht. Sollte der Micro-Controller geschwindigkeitsabhängig zwischen diesen Möglichkeiten wählen, so ist es günstig, die Erhöhung entsprechend dem Vielfachen einer Halb-Periode zu wählen. Die Anzahl der Nulldurchgänge ist abhängig vom Reifenabrollumfang und von der Anzahl der Zähne des Polrades. Die Zahlenwerte werden ständig von einem Vergleicher 64 bewertet oder nur beim Überlauf des Zählregisters mit der höchsten erreichten Zählzahl.

Beispiel: Bei einem Abrollumfang von 3.425 mm und einem Polrad mit 100 Zähnen stellt jeder Nulldurchgang eine Wegstrecke von 17,125 mm dar. Nach einer festgelegten Wegstrecke von z. B. 1 km werden die erreichten Zählwerte miteinander verglichen. Als digital einfache Maßnahme kann die Bewertung der erreichten Zählwerte dann ausgelöst werden, wenn der Zählwert zu einem Überlauf des Zählregisters führt. Bei 16-Bit-Zählregistern erfolgt der Überlauf, wenn der Zahlenwert 65.535 ($2^{16}$ - 1) erhöht wird. 65.535 + 1 ist gleich Null, da die 17. Stelle der Binärzahl nicht verfügbar ist, s. Darstellung im Diagramm gemäß Fig. 11. Der Zählwert $2^{16}$ = 65.536 entspricht 1,122 km. Dies ergibt eine Auflösung von 1/65536 entsprechend 0,0015 %.

Untersuchungen ergaben, daß die Radgeschwindigkeit um ca. 0,5 % pro bar Druckverlust zunimmt. Dies bedeutet, daß die Periodendauer und damit die Wegstrecke eines Zahnes um ca. 0,5 % pro bar abnimmt. Da 100 Zähne den Abrollumfang des Reifens repräsentieren, ist auch dieser um besagten Wert verkleinert. Die o. g. günstige Auflösung (Meßgenauigkeit) ist bei diesem Beispiel um den Faktor 328 größer als der zu messende Einfluß der Druckminderung (pro bar).

Die erreichten Zählergebnisse werden gewichtet. Wie bei ASR-Schwellenüberschreitungsberechnung üblich, wird die Differenz seitengleicher Räder höher bewertet als achsgleiche bzw. diagonal angeordnete Räder.

Die Wegstreckenermittlung kann unterbrochen bzw. abgebrochen und neu gestartet werden, z. B. wenn eine instationäre Fahrsituation erkannt wird wie etwa Antiblockierschutzregelung, Antriebsschlupfregelung, Kurvenfahrt oder auch Fahrt mit geringer Geschwindigkeit.

Die erfindungsgemäße Einrichtung zur Wegstreckenermittlung arbeitet geschwindigkeitsunabhängig. Es ist kein weiterer Aufwand notwendig, um entweder die Geschwindigkeitsberechnung zu verbessern bzw. das Ergebnis stark zu filtern, um kurzzeitige Schwankungen zu eliminieren. Die Berücksichtigung von Meßungenauigkeiten, wie Rundungsfeh-1er bei der Geschwindigkeitsberechnung entfallen. Die zurückgelegte Wegstrecke des Rades wird direkt ermittelt, ohne eine andere Rechengröße zu benötigen. Die ermittelte Wegstrecke bildet ein Integral, so daß Schwankungen von einzelnen Periodendauern, hervorgerufen z. B. durch Fahrbahnunebenheiten, keinen Einfluß haben.

**Patentansprüche**

1. Verfahren zur Reifendrucküberwachung bei einem wenigstens vierrädrigen Fahrzeug (4), bei dem mittels Radsensoren (25, 26, 27, 28, 29, 30) radrotationsabhängige Größen an wenigstens vier Rädern (A1r, A1l, A2r, A2l, A3r, A3l) erfasst und ausgewertet werden, **gekennzeichnet durch** eine Zählung der jeweils zurückgelegten Wegstrecke unter Auswertung der jeweiligen radrotationsabhängigen Größen an jedem der hinsichtlich des Reifendrucks beobachteten Räder (A1r, A1l, A2r, A2l, A3r, A3l), wobei die radrotationsabhängigen Größen gepulste Signale sind und für die Wegstreckenzählung die Signalspulse gezählt werden.

2. Verfahren nach Anspruch 1, **dadurch gekennzeichnet, dass** für die Wegstreckenzählung die Halbwellen der gepulsten Signale gezählt werden.

3. Verfahren nach Anspruch 1 oder 2, **dadurch gekennzeichnet, dass** die gezählten Wegstrecken der einzelnen Räder (A1r, A1l, A2r, A2l, A3r, A3l) jeweils diagonal bezüglich der Radanordnung an dem Fahrzeug (4) miteinander addiert werden.

4. Verfahren nach Anspruch 3, **dadurch gekennzeichnet, dass** eine Erkennung auf einen unerwünschten Reifendruck-Zustand erfolgt, wenn die diagonalen Summen der Wegstrecken um mehr als einen vorgegebenen Grenzwert voneinander abweichen.

5. Verfahren nach einem der vorhergehenden Ansprüche, **dadurch gekennzeichnet, dass** die Überwachung der gezählten Wegstrecken in mehreren Überwachungszyklen erfolgt und die Erkennung auf einen unerwünschten Reifendruck-Zustand erfolgt, wenn die Abweichungen der diagonalen Summen einen für alle Überwachungszyklen festgelegten Summengrenzwert überschreitet.

6. Verfahren nach einem der Ansprüche 2 bis 5, **dadurch gekennzeichnet, dass** die Position eines einen unerwünschten Reifendruck aufweisenden Rades (A1r, A1l, A2r, A2l, A3r, A3l) durch Auswertung der Vorzeichen der miteinander verglichenen diagonalen Summen bestimmt wird.

7. Reifendrucküberwachungssystem für mit Antiblockierschutzsystemen (ABS-Systemen) ausgerüstete Fahrzeuge, insbesondere Fahrzeuge mit mehr als zwei Achsen, mit Radsensoren an den Rädern wenigstens einer Achse zur Erfassung von von der Radrotation abhängigen Größen und mit einer ABS-Steuereinheit, die die ermittelten Größen miteinander verknüpft und hinsichtlich Änderung der Abrollradien der Räder unter Berücksichtigung fahrbetriebsbedingter Änderungen der Größen auswertet und ein Warnsignal erzeugt, wenn die durch Reifendruckabfall bewirkte Änderung der Größen einen vorgegeben Grenzwert überschreitet, **dadurch gekennzeichnet, dass** zusätzlich zu radrotationsabhängige Größen erfassenden Radsensoren (25, 26, 27, 28, 29, 30) des ABS-Systems (2) ein Reifendruckmeßsystem (12) vorgesehen ist, das den Reifenfülldruck der Räder wenigstens einer Achse (A1, A2, A3) misst und ein Warnsignal erzeugt, wenn der gemessene Reifenfülldruck einen vorgegebenen Solldruck unterschreitet, wobei die radrotationsabhängigen Größen die zurückgelegten Rad-Wegstrecken sind.

8. Reifendrucküberwachungssystem nach Anspruch 7, **dadurch gekennzeichnet, dass** das Reifendruckmeßsystem (12) intern im oder am Reifen oder extern am Fahrzeug angeordnete Radelektroniken (31, 32, 33, 34, 35, 36, 37, 38, 39) aufweist, die jeweils einen Drucksensor und eine HF-Sendestufe umfassen, welche die gemessenen Druckwerte an eine Empfänger/Auswerteeinheit (42) überträgt, die die mitgeteilten Druckwerte mit vorgegebenen Sollwerten vergleicht und das Warnsignal erzeugt, wenn die Differenz zwischen gemessenen Druckwert und Sollwert einen vorgegebenen Schwellwert überschreitet.

9. Reifendrucküberwachungssystem nach Anspruch 7 oder 8, **dadurch gekennzeichnet, dass** für jedes Rad sämtlicher Achsen (A1, A2, A3) Radsensoren (25, 26, 27, 28, 29, 30) des ABS-Systems und den Reifenfülldruck messende Radelektroniken (31, 32, 33, 34, 35, 36, 37, 38, 39, 40) vorgesehen sind, wobei die Radrotationsgeschwindigkeiten oder Wegstrecken der einzelnen Räder oder die Summen der Radrotationsgeschwindigkeiten oder Wegstrecken diagonal angeordneter Räder in der ABS-Steuereinheit (6) miteinander verglichen werden, die ein Warnsignal erzeugt, wenn die Differenz der miteinander verglichenen Wegstrecken oder Radrotationsgeschwindigkeiten oder die Differenz der miteinander verglichenen Summen der Radrotationsgeschwindigkeiten oder Wegstrecken einen vorgegebenen Schwellwert überschreitet.

10. Reifendrucküberwachungssystem nach einem der Ansprüche 7 bis 9, **dadurch gekennzeichnet, dass** bei Fahrzeugen mit (2+ n)-Achsen (n $\geq$ 1) den Reifenfülldruck messende Radelektroniken (31-40) für sämtliche Räder aller (2 + n)-Achsen (A1, A2, A3) und Radsensoren (25-30) des ABS-Systems (2) für die Räder sämtlicher (2 + n)-Achsen vorgesehen sind, wobei die ABS-Steuereinheit (6) die Summen der Radrotationsgeschwindigkeiten oder Wegstrecken diagonal angeordneter Räder miteinander vergleicht und ein Warnsignal erzeugt, wenn die Differenz der Summen einen vorgegebenen Schwellwert überschreitet.

11. Reifendrucküberwachungssystem nach Anspruch 10, **dadurch gekennzeichnet, dass** bei Fahrzeugen mit drei Achsen die Reifenfülldruck messenden Radelektroniken (34-40) für die Räder der zweiten und dritten Achse (A2, A3) und Radsensoren (25-28) des ABS-Systems an den Rädern der ersten und zweiten Achse (A1, A2) vorgesehen sind.

12. Reifendrucküberwachungssystem nach Anspruch 10, **dadurch gekennzeichnet, dass** bei Fahrzeugen mit drei Achsen den Reifenfülldruck messende Radelektroniken (31, 32, 37, 38, 39, 40) für die Räder der ersten und dritten Achse (A1, A3) und Radsensoren (25, 26, 27, 28) an den Rädern der ersten und zweiten Achse (A1, A2) vorgesehen sind.

13. Reifendrucküberwachungssystem nach Anspruch 10, **dadurch gekennzeichnet, dass** bei Fahrzeugen mit drei Achsen den Reifenfülldruck messende Radelektroniken (37, 38, 39, 40) für die Räder der dritten Achse (A3) und Radsensoren (25, 26, 27, 28) des ABS-Systems an den Rädern der ersten und zweiten Achse (A1, A2) vorgesehen sind.

14. Reifendrucküberwachungssystem nach Anspruch 10, **dadurch gekennzeichnet, dass** bei Fahrzeugen mit drei Achsen den Reifenfülldruck messende Radelektroniken (31, 32) nur für die Räder der ersten Achse (Vorder- bzw. Lenkachse) (A1) und Radsensoren (25, 26, 27, 28, 29, 30) für die Räder sämtlicher Achsen (A1, A2, A3) vorgesehen sind.

15. Reifendrucküberwachungssystem nach Anspruch 10, **dadurch gekennzeichnet, dass** bei Fahrzeugen mit drei Achsen den Reifenfülldruck messende Radelektroniken (31, 32, 33, 34, 35, 36) für die Räder der ersten und zweiten Achse (A1, A2) und Radsensoren (25-30) für die Räder sämtlicher Achsen (A1, A2, A3) vorgesehen sind.

16. Reifendrucküberwachungssystem nach Anspruch 10, **dadurch gekennzeichnet, dass** bei Fahrzeugen mit drei Achsen den Reifenfülldruck messende Radelektroniken (31, 32, 37, 38, 39, 40) für die Räder der ersten und dritten Achse (A1, A3) und Radsensoren (25-30) für die Räder sämtlicher Achsen (A1, A2, A3) vorgesehen sind.

17. Reifendrucküberwachungssystem nach einem der vorhergehenden Ansprüche, **dadurch gekennzeichnet, dass** die Empfänger/Auswerteeinheit (42) des Reifendruckmeßsystems (12) in die ABS-Steuereinheit (6) integriert ist, welche die Auswertung der gemessenen Druckwerte übernimmt.

18. Reifendrucküberwachungssystem nach Anspruch 17, **dadurch gekennzeichnet, dass** eine für das ABS-System (2) ggf. vorhandene CAN-Schnittstelle (8) auch für die Messsignale des Reifendruckmeßsystems (12) verwendet wird.

19. Reifendrucküberwachungssystem nach einem der vorhergehenden Ansprüche, **dadurch gekennzeichnet, dass** bei Vorhandensein von Zwillingsbereifung an Achsen (A2, A3) des Fahrzeugs den Reifenfülldruck messende Radelektroniken für sämtliche Zwillingsräder der sensierten Achsen vorgesehen sind.

20. Reifendrucküberwachungssystem nach einem der vorhergehenden Ansprüche, **dadurch gekennzeichnet, dass** die Radelektroniken (31-40) des Reifendruckmesssystemes (12) jeweils mit einer eigenen Kennung versehen sind, die beim Senden der Messdaten mit übertragen werden.

**Claims**

1. Method of monitoring tyre pressure in a vehicle (4) having at least four wheels, in which by means of wheel sensors (25, 26, 27, 28, 29, 30) wheel-rotation-dependent variables are detected at at least four wheels (A1r, A1l, A2r, A2l, A3r, A3l) and evaluated, **characterized by** making a count of the travel distance covered in each case, with evaluation of the respective wheel-rotation-dependent variables, at each of the wheels (A1r, A1l, A2r, A2l, A3r, A3l) being monitored in respect of tyre pressure, the wheel-rotation-dependent variables being pulsed signals and, for the travel distance count, the signal pulses being counted.

2. Method according to claim 1, **characterized in that** for the travel distance count the half-waves of the pulsed signals are counted.

3. Method according to claim 1 or 2, **characterized in that** the counted travel distances of the individual wheels (A1r, A1l, A2r, A2l, A3r, A3l) are added to one another in each case diagonally in respect of the wheel arrangement on the vehicle (4).

4. Method according to claim 3, **characterized in that** an undesirable tyre pressure state is identified when the diagonal sums of the travel distances differ from one another by more than a preset limit value.

5. Method according to any one of the preceding claims, **characterized in that** the monitoring of the counted travel distances is effected in a plurality of monitoring cycles and an undesirable tyre pressure state is identified when the differences of the diagonal sums exceeds a sum limit value specified for all monitoring cycles.

6. Method according to any one of the claims 2 to 5, **characterized in that** the position of a wheel (A1r, A1l, A2r, A2l, A3r, A3l) having an undesirable tyre pressure is determined by evaluation of the signs of the diagonal sums being compared with one another.

7. Tyre pressure monitoring system for vehicles equipped with anti-lock braking systems (ABS systems), especially vehicles having more than two axles, having wheel sensors at the wheels of at least one axle for detecting variables that are dependent upon wheel rotation and having an ABS control unit which links the detected variables to one another and evaluates them in respect of a change in the rolling radii of the wheels, taking account of drive-operation-related changes in the variables, and generates a warning signal when the change in the variables brought about by a fall in tyre pressure exceeds a preset limit value, **characterized in that** in addition to wheel sensors (25, 26, 27, 28, 29, 30) of the ABS system (2) which detect wheel-rotation-dependent variables there is provided a tyre pressure measuring system (12) which measures the tyre-inflation pressure of the wheels of at least one axle (A1, A2, A3) and generates a warning signal when the measured tyre-inflation pressure falls below a preset desired pressure, the wheel-rotation-dependent variables being the travel distances covered by the wheels.

8. Tyre pressure monitoring system according to claim 7, **characterized in that** the tyre pressure measuring system (12) has wheel electronics units (31, 32, 33, 34, 35, 36, 37, 38, 39) arranged internally in or on the tyre or externally on the vehicle, each of which units comprises a pressure sensor and an HF transmission stage which transmits the measured pressure values to a receiver/evaluating unit (42) that compares the pressure values received with preset desired values and generates a warning signal when the difference between the measured pressure value and the desired value crosses a preset threshold value.

9. Tyre pressure monitoring system according to claim 7 or 8, **characterized in that** wheel sensors (25, 26, 27, 28, 29, 30) of the ABS system and wheel electronics units (31, 32, 33, 34, 35, 36, 37, 38, 39, 40) that measure the tyre-inflation pressure are provided for each wheel of all axles (A1, A2, A3), the wheel rotational speeds or travel distances of the individual wheels or the sums of the wheel rotational speeds or travel distances of diagonally arranged wheels being compared with one another in the ABS control unit (6), which generates a warning signal when the difference of the travel distances or wheel rotational speeds being compared with one another or the difference of the sums of the wheel rotational speeds or travel distances being compared with one another crosses a preset threshold value.

10. Tyre pressure monitoring system according to any one of claims 7 to 9, **characterized in that** in vehicles having (2 + n) axles (n ≥ 1), wheel electronics units (31-40) that measure the tyre-inflation pressure are provided for all wheels of all (2 + n) axles (A1, A2, A3) and wheel sensors (25-30) of the ABS system (2) are provided for the wheels of all (2 + n) axles, the ABS control unit (6) comparing the sums of the wheel rotational speeds or travel distances of diagonally arranged wheels with one another and generating a warning signal when the difference of the sums crosses a preset threshold value.

11. Tyre pressure monitoring system according to claim 10, **characterized in that** in vehicles having three axles, wheel electronics units (34-40) that measure the tyre-inflation pressure are provided for the wheels of the second and third axles (A2, A3) and wheel sensors (25-28) of the ABS system are provided at the wheels of the first and second axles (A1, A2).

12. Tyre pressure monitoring system according to claim 10, **characterized in that** in vehicles having three axles, wheel electronics units (31, 32, 37, 38, 39, 40) that measure the tyre-inflation pressure are provided for the wheels of the first and third axles (A1, A3) and wheel sensors (25, 26, 27, 28) are provided at the wheels of the first and second axles (A1, A2).

13. Tyre pressure monitoring system according to claim 10, **characterized in that** in vehicles having three axles, wheel electronics units (37, 38, 39, 40) that measure the tyre-inflation pressure are provided for the wheels of the third axle (A3) and wheel sensors (25, 26, 27, 28) of the ABS system are provided at the wheels of the first and second axles (A1, A2).

14. Tyre pressure monitoring system according to claim 10, **characterized in that** in vehicles having three axles, wheel electronics units (31, 32) that measure the tyre-inflation pressure are provided only for the wheels of the first axle (front or steering axle) (A1) and wheel sensors (25, 26, 27, 28, 29, 30) are provided for the wheels of all axles (A1, A2, A3).

15. Tyre pressure monitoring system according to claim 10, **characterized in that** in vehicles having three axles, wheel electronics units (31, 32, 33, 34, 35, 36) that measure the tyre-inflation pressure are provided for the wheels of the first and second axles (A1, A2) and wheel sensors (25-30) are provided for the wheels of all axles (A1, A2, A3).

16. Tyre pressure monitoring system according to claim 10, **characterized in that** in vehicles having three axles, wheel electronics units (31, 32, 37, 38, 39, 40) that measure the tyre-inflation pressure are provided for the wheels of the first and third axles (A1, A3) and wheel sensors (25-30) are provided for the wheels of all axles (A1, A2, A3).

17. Tyre pressure monitoring system according to any one of the preceding claims, **characterized in that** the receiver/ evaluating unit (42) of the tyre pressure measuring system (12) is integrated into the ABS control unit (6), which assumes the evaluation of the measured pressure values.

18. Tyre pressure monitoring system according to claim 17, **characterized in that** a CAN interface (8) possibly present for the ABS system (2) is also used for the measurement signals of the tyre pressure measuring system (12).

19. Tyre pressure monitoring system according to any one of the preceding claims, **characterized in that** when there are twin tyres at axles (A2, A3) of the vehicle, wheel electronics units that measure the tyre-inflation pressure are provided for all twin wheels of the sensed axles.

20. Tyre pressure monitoring system according to any one of the preceding claims, **characterized in that** the wheel electronics units (31-40) of the tyre pressure measuring system (12) are each provided with their own identifier, which identifiers are also transmitted when the measurement data are transmitted.

**Revendications**

1. Procédé de surveillance de la pression de pneumatique dans un véhicule (4) à au moins quatre roues, d'après lequel, au moyen de capteurs de roue (25, 26, 27, 28, 29, 30) sont relevées et traitées des grandeurs dépendant de la rotation de roue sur au moins quatre roues (A1r, A1l, A2r, A2l, A3r, A3l),
**caractérisé par** un comptage de la distance de déplacement respectivement couverte en exploitant les grandeurs correspondantes dépendant de la rotation de roue sur chacune des roues (A1r, A1l, A2r, A2l, A3r, A3l) contrôlées quant à la pression de pneumatique, les grandeurs dépendant de la rotation de roue étant des signaux pulsés et les signaux pulsés étant comptés pour le comptage de la distance de déplacement.

2. Procédé selon la revendication 1, **caractérisé en ce que** pour le comptage de la distance de déplacement, on effectue le comptage des demi-ondes des signaux pulsés.

3. Procédé selon la revendication 1 ou 2, **caractérisé en ce que** les distances de déplacement comptées des roues individuelles (A1r, A1l, A2r, A2l, A3r, A3l) sont additionnées les unes aux autres respectivement de manière diagonale relativement à l'agencement des roues sur le véhicule (4).

4. Procédé selon la revendication 3, **caractérisé en ce qu'**une constatation d'un état de pression de pneumatique non souhaité se fait lorsque les sommes diagonales des distances de déplacement présentent un écart mutuel supérieur à une valeur de seuil prescrite.

5. Procédé selon l'une des revendications précédentes, **caractérisé en ce que** la surveillance des distances de déplacement comptées s'effectue en plusieurs cycles de surveillance, et la constatation d'un état de pression de pneumatique non souhaité se fait lorsque les écarts des sommes diagonales dépassent une valeur de seuil de somme fixée pour tous les cycles de surveillance.

6. Procédé selon l'une des revendications 2 à 5, **caractérisé en ce que** la position d'une roue (A1r, A1l, A2r, A21, A3r, A31) présentant une pression de pneumatique non souhaitée, est déterminée par l'exploitation des signes des sommes diagonales comparées mutuellement.

7. Système de surveillance de la pression de pneumatique pour des véhicules équipés de systèmes de sécurité antiblocage (systèmes ABS), notamment des véhicules avec plus de deux essieux, comprenant des capteurs de roue au niveau des roues d'au moins un essieu pour relever des grandeurs dépendant de la rotation de roue, et comprenant une unité de commande ABS qui combine les grandeurs déterminées et les traite quant à la variation des rayons de roulement des roues en tenant compte de variations des grandeurs dues aux conditions de fonctionnement en marche, et produit un signal d'alarme lorsque la variation des grandeurs produite par une chute de pression de pneumatique dépasse une valeur de seuil prescrite, **caractérisé en ce qu'**en plus de capteurs de roue (25, 26, 27, 28, 29, 30) du système ABS (2), qui relèvent des grandeurs dépendant de la rotation de roue, est prévu un système de mesure de la pression de pneumatique (12), qui mesure la pression de remplissage de pneumatique des roues d'au moins un essieu (A1, A2, A3), et engendre un signal d'alarme lorsque la pression de remplissage de pneumatique mesurée est inférieure à une valeur de pression de consigne prescrite, les grandeurs dépendant de la rotation de roue étant les distances de déplacement de roue parcourues.

8. Système de surveillance de la pression de pneumatique selon la revendication 7, **caractérisé en ce que** le système de mesure de la pression de pneumatique (12) comprend des électroniques de roue (31, 32, 33, 34, 35, 36, 37, 38, 39) agencées de manière interne au pneumatique ou au niveau de celui-ci, ou bien de manière externe sur le véhicule, et qui comprennent chacune un capteur de pression et un étage d'émission HF transmettant les valeurs de pression mesurées à une unité de réception/traitement (42) qui compare les valeurs de pression communiquées à des valeurs de consigne prescrites et produit le signal d'alarme lorsque la différence entre la valeur de pression mesurée et la valeur de consigne dépasse une valeur de seuil prescrite.

9. Système de surveillance de la pression de pneumatique selon la revendication 7 ou 8, **caractérisé en ce que** pour chaque roue de la totalité des essieux (A1, A2, A3), sont prévus des capteurs de roue (25, 26, 27, 28, 29, 30) du système ABS et des électroniques de roue (31, 32, 33, 34, 35, 36, 37, 38, 39, 40) mesurant la pression de remplissage de pneumatique, les vitesses de rotation de roue ou les distances de déplacement des roues individuelles ou les sommes des vitesses de rotation de roue ou des distances de déplacement de roues agencées en diagonale étant comparées mutuellement dans l'unité de commande ABS (6) qui produit un signal d'alarme lorsque la différence des distances de déplacement ou des vitesses de rotation de roue comparées mutuellement, ou la différence des sommes des vitesses de rotation de roue ou des distances de déplacement, comparées mutuellement, dépasse une valeur de seuil prescrite.

10. Système de surveillance de la pression de pneumatique selon l'une des revendications 7 à 9, **caractérisé en ce que** pour des véhicules avec (2 + n) essieux (n ≥ 1), des électroniques de roue (31-40) mesurant la pression de remplissage de pneumatique sont prévus pour l'ensemble des roues de tous les (2 + n) essieux (A1, A2, A3), et des capteurs de roue (25-30) du système ABS (2) pour les roues de l'ensemble des (2 + n) essieux, l'unité de commande ABS (6) comparant mutuellement les sommes des vitesses de rotation de roue ou des distances de déplacement de roues agencées en diagonale et produisant un signal d'alarme lorsque la différence des sommes dépasse une valeur de seuil prescrite.

11. Système de surveillance de la pression de pneumatique selon la revendication 10, **caractérisé en ce que** dans le cas de véhicules avec trois essieux, des électroniques de roue (35-40) mesurant la pression de remplissage de pneumatique sont prévues pour les roues du deuxième et du troisième essieu (A2, A3), et des capteurs de roue (25-28) du système ABS sont prévus au niveau des roues du premier et du deuxième essieu (A1, A2).

**12.** Système de surveillance de la pression de pneumatique selon la revendication 10, **caractérisé en ce que** dans le cas de véhicules avec trois essieux, des électroniques de roue (31, 32, 37, 38, 39, 40) mesurant la pression de remplissage de pneumatique sont prévues pour les roues du premier et du troisième essieu (A1, A3), et des capteurs de roue (25, 26, 27, 28) sont prévus au niveau des roues du premier et du deuxième essieu (A1, A2).

**13.** Système de surveillance de la pression de pneumatique selon la revendication 10, **caractérisé en ce que** dans le cas de véhicules avec trois essieux, des électroniques de roue (37, 38, 39, 40) mesurant la pression de remplissage de pneumatique sont prévues pour les roues du troisième essieu (A3), et des capteurs de roue (25, 26, 27, 28) du système ABS sont prévus au niveau des roues du premier et du deuxième essieu (A1, A2).

**14.** Système de surveillance de la pression de pneumatique selon la revendication 10, **caractérisé en ce que** dans le cas de véhicules avec trois essieux, des électroniques de roue (31, 32) mesurant la pression de remplissage de pneumatique sont prévues uniquement pour les roues du premier essieu (essieu avant ou essieu directionnel) (A1), et des capteurs de roue (25, 26, 27, 28, 29, 30) du système ABS sont prévus pour les roues de l'ensemble des essieux (A1, A2, A3).

**15.** Système de surveillance de la pression de pneumatique selon la revendication 10, **caractérisé en ce que** dans le cas de véhicules avec trois essieux, des électroniques de roue (31, 32, 33, 34, 35, 36) mesurant la pression de remplissage de pneumatique sont prévues pour les roues du premier et du deuxième essieu (A1, A2), et des capteurs de roue (25-30) sont prévus pour les roues de l'ensemble des essieux (A1, A2, A3).

**16.** Système de surveillance de la pression de pneumatique selon la revendication 10, **caractérisé en ce que** dans le cas de véhicules avec trois essieux, des électroniques de roue (31, 32, 37, 38, 39, 40) mesurant la pression de remplissage de pneumatique sont prévues pour les roues du premier et du troisième essieu (A1, A3), et des capteurs de roue (25-30) sont prévus pour les roues de l'ensemble des essieux (A1, A2, A3).

**17.** Système de surveillance de la pression de pneumatique selon l'une des revendications précédentes, **caractérisé en ce que** l'unité de réception/traitement (42) du système de mesure de pression de pneumatique (12) est intégrée à l'unité de commande ABS (6), qui reprend le traitement des valeurs de pression mesurées.

**18.** Système de surveillance de la pression de pneumatique selon la revendication 17, **caractérisé en ce qu'**une interface CAN (8) éventuellement existante pour le système ABS (2), est également utilisée pour les signaux de mesure du système de mesure de pression de pneumatique (12).

**19.** Système de surveillance de la pression de pneumatique selon l'une des revendications précédentes, **caractérisé en ce qu'**en présence de montages jumelés de pneumatiques sur des essieux (A2, A3) du véhicule, les électroniques de roue mesurant la pression de remplissage de pneumatique sont prévues pour l'ensemble des roues jumelées des essieux détectés.

**20.** Système de surveillance de la pression de pneumatique selon l'une des revendications précédentes, **caractérisé en ce que** les électroniques de roue (31-40) du système de mesure de pression de pneumatique (12) sont chacune dotées de leur propre identification, ces identifications étant transmises en même temps que les données de mesure.

Fig. 1

31 A1r 25 A1 10 26 A1l 32 44 42 CAN 12 CAN 8 6 2 4 34 33 A2 A2r 27 A2l 28 35 36 38 A3r 29 37 A3 30 A3l 39 40

EP 1 236 588 B1

13

Fig. 2

EP 1 236 588 B1

Fig. 3

Fig. 4

EP 1 236 588 B1

Fig. 5

Fig. 6

Fig. 7

Fig. 8

Fig. 9

EP 1 236 588 B1

Fig. 10

Fig. 11

26

vorn links

hinten links

28

25

vorn rechts

hinten rechts

27

60

Eingangs-Schaltungen

| Periodendauermessung | Geschwindigkeitsberechnung |

Wegstreckenzählung

vorn links

Reset

Wegstreckenzählung hinten links

Periodendauermessung

Geschwindigkeitsberechnung

Geschwindigkeitsberechnung

Periodendauermessung

Wegstreckenzählung vorn rechts

Reset

Vergleich 64

Wegstreckenzählung hinten rechts

Periodendauermessung Geschwindigkeitsberechnung

Reset

Diagnose

EE-PROM

Kanal-Rechner

62

Anzahl
Perioden

z.B. 65 535

Abweichung

Wegstrecke

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0489562 A
- EP 0489563 A
- EP 0607690 A
- DE 19807880 A

**In der Beschreibung aufgeführte Nicht-Patentliteratur**

- *ATZ,* vol. 102 (200), 950
- *ATZ,* 1992, vol. 94, 336-340